# EUROPÄISCHE PATENTSCHRIFT

(11) **EP 1 386 220 B1**
(45) Veröffentlichungstag und Bekanntmachung des Hinweises auf die Patenterteilung: **10.12.2014**
(21) Anmeldenummer: 02724198.3
(22) Anmeldetag: 05.03.2002
(51) Int. Cl.: G06F 1/32

(54) **VERFAHREN UND VORRICHTUNG ZU DATENBE- UND/ODER VERARBEITUNG**
METHODS AND DEVICES FOR TREATING AND PROCESSING DATA
PROCEDE ET DISPOSITIF POUR LA MISE EN FORME ET/OU LE TRAITEMENT DE DONNEES

(30) Priorität: 05.03.2001 DE 10110530; 07.03.2001 DE 10111014; 13.06.2001 WO PCT/EP01/06703; 20.06.2001 DE 10129237; 20.06.2001 EP 01115021; 24.07.2001 DE 10135210; 24.07.2001 DE 10135211; 24.07.2001 WO PCT/EP01/08534; 16.08.2001 DE 10139170; 29.08.2001 DE 10142231; 03.09.2001 DE 10142894; 03.09.2001 DE 10142903; 03.09.2001 DE 10142904; 07.09.2001 US 317876 P; 11.09.2001 DE 10144732; 11.09.2001 DE 10144733; 17.09.2001 DE 10145792; 17.09.2001 DE 10145795; 19.09.2001 DE 10146132; 28.09.2001 US 967847; 30.09.2001 WO PCT/EP01/11299; 08.10.2001 WO PCT/EP01/11593; 05.11.2001 DE 10154260; 05.11.2001 DE 10154259; 14.12.2001 EP 01129923; 18.01.2002 EP 02001331; 19.01.2002 DE 10202044; 20.01.2002 DE 10202175; 15.02.2002 DE 10206653; 18.02.2002 DE 10206857; 18.02.2002 DE 10206856; 21.02.2002 DE 10207226; 21.02.2002 DE 10207224; 21.02.2002 DE 10207225; 27.02.2002 DE 10208435; 27.02.2002 DE 10208434
(43) Veröffentlichungstag der Anmeldung: 04.02.2004
(73) Patentinhaber: PACT XPP Technologies AG, 80807 Munich (DE)
(72) Erfinder: VORBACH, Martin, 67360 Lingenfeld (DE); BAUMGARTE, Volker, 81677 München (DE)
(74) Vertreter: Pietruk, Claus Peter
(86) Internationale Anmeldenummer: PCT/EP2002/002402
(87) Internationale Veröffentlichungsnummer: WO 2002/071196

(56) Entgegenhaltungen:
- US-A- 5 047 924
- US-A- 5 625 806
- US-A- 5 892 370
- US-A- 6 081 903

## Beschreibung

Die vorliegende Erfindung betrifft das oberbegrifflich Beanspruchte und befasst sich somit mit der Frage, wie bei der Datenverarbeitung eine Optimierung der verwendeten Hardware erreicht werden kann.

Bei der Datenverarbeitung ist es erforderlich, sowohl die verfügbaren Ressourcen zu optimieren, als auch den Energieverbrauch der mit der Datenverarbeitung befassten Schaltungen. Dies gilt insbesondere bei rekonfigurierbaren Prozessoren.

Unter einer rekonfigurierbaren Architektur werden vorliegend Bausteine (VPU) mit konfigurierbarer Funktion und/oder Vernetzung verstanden, insbesondere integrierte Bausteine mit einer Mehrzahl von ein- oder mehrdimensional angeordneten arithmetischen und/oder logischen und/oder analogen und/oder speichernden und/oder intern/extern vernetzenden Baugruppen, die direkt oder durch ein Bussystem miteinander verbunden sind.

Zur Gattung dieser Bausteine zählen insbesondere systolische Arrays, neuronale Netze, Mehrprozessor Systeme, Prozessoren mit mehreren Rechenwerken und/oder logischen Zellen und/oder kommunikativen/peripheren Zellen (IO), Vernetzungs- und Netzwerkbausteine wie z.B. Crossbar-Schalter, ebenso wie bekannte Bausteine der Gattung FPGA, DPGA, Chameleon, XPUTER, etc.. Hingewiesen wird insbesondere in diesem Zusammenhang auf die folgenden Schutzrechte und Anmeldungen desselben Anmelders: DE 44 16 881.0-53, DE 197 81 412.3, DE 197 81 483.2, DE 196 54 846.2-53, DE 196 54 593.5-53, DE 197 04 044.6-53, DE 198 80 129.7, DE 198 61 088.2-53, DE 199 80 312.9, WO 00/77652, DE 100 36 627.9-33, DE 100 28 397.7, DE 101 10 530.4, DE 101 11 014.6, EP 01 102 674.7, WO 98/26356 (PACT02/PCT), WO 98/29952 (PACT04/PCT), WO 98/31102 (PACT05/PCT), WO 98/35299 (PACT08/PCT), WO 99/44147 (PACT10b/PCT), WO 99/44120 (PACT10c/PCT), DE 101 39 170.6 (PACT11), DE 101 42 903.7 (PACT11a), DE 101 44 732.9 (PACT11b), DE 101 45 792.8 (PACT11c), DE 101 54 260.7 (PACT11d), DE 102 07 225.6 (PACT11e), DE 101 42 904.5 (PACT21), DE 101 44 733.7 (PACT21a), DE 101 54 259.3 (PACT21b), DE 102 07 226.4 (PACT21c), DE 101 46 132.1 (PACT18II), DE 102 02 044.2 (PACT19), DE 102 02 175.9 (PACT19a), DE 101 35 210.7 (PACT25), DE 101 35 211.5 (PACT25a), DE 101 42 231.8 (PACT25aII), DE 102 08 434.3 (PACT25b). Diese sind hiermit zu Offenbarungszwecken vollumfänglich eingegliedert.

US5892370 offenbart eine Datenverarbeitungseinheit mit einem in unterschiedlichen Konfigurationszuständen betreibbaren Feld getakteter Logikzellen und einem Taktvorgabemittel zur Vorgabe einer Logikzellentaktung.

Die o.g. Architektur wird beispielhaft zur Verdeutlichung herangezogen und im folgenden VPU genannt. Die Architektur besteht aus beliebigen arithmetischen, logischen (auch Speicher) und/oder Speicherzellen und/oder Vernetzungszellen und/oder kommunikativen/peripheren (IO) Zellen (PAEs), die zu einer ein- oder mehrdimensionalen Matrix (PA) angeordnet sein können, wobei die Matrix unterschiedliche beliebig ausgestaltete Zellen aufweisen kann, auch die Bussysteme werden dabei als Zellen verstanden. Der Matrix als ganzes oder Teilen davon zugeordnet ist eine Konfigurationseinheit (CT), die die Vernetzung und Funktion des PA durch Konfigurations bestimmt. Die Konfiguration einer VPU wird durch das Schreiben von Konfigurationsworten in Konfigurationsregister bestimmt. Jedes Konfigurationswort bestimmt eine Teilfunktion. PAEs können mehrere Konfigurationsworte für ihre Konfiguration benötigen, beispielsweise eines/oder mehrere für die Vernetzung der PAE, eines/oder mehrere für die Taktbestimmung und eines/oder mehrere zur Auswahl einer ALU-Funktion, etc.

Es ist bekannt, dass ein Prozessor, der mit höherer Taktfrequenz betrieben wird, mehr Leistung erfordert. Bei modernen Prozessoren steigen daher die Anforderungen an die Kühlung mit zunehmender Taktfrequenz stark an. Überdies muss ein Mehr an Leistungsversorgung bereit gestellt werden, was insbesondere bei mobilen Anwendungen kritisch ist.

Es ist bereits bekannt, zustandsabhängig die Taktfrequenz für einen Microprozessor zu bestimmen. Derartige Techniken sind aus dem Bereich mobiler Computer bekannt. Dabei ergeben sich jedoch Probleme in der Gesamtgeschwindigkeit, mit der bestimmte Anwendungen ausgeführt werden.

Aufgabe der Erfindung ist es Neues für die gewerbliche Anwendung bereitzustellen.

Die Lösung dieser Aufgabe wird unabhängig beansprucht.

Die vorliegende Erfindung gibt somit an, wie der Stromverbrauch bei einer VPU-Technologie verringert und/oder optimiert werden kann. Es sei darauf hingewiesen, dass, soweit im Nachfolgenden unterschiedliche Verfahren hierzu angesprochen werden, diese einzeln oder in Kombination Vorteile bringen.

Gemäß einem ersten wesentlichen Aspekt der Erfindung wird also bei einer Datenverarbeitungseinheit (VPU) mit einem in unterschiedlichen Konfigurationszuständen betreibbaren Feld getakteter Logikzellen (PAEs) und einem Taktvorgabemittel zur Vorgabe einer Logikzellentaktung das Taktvorgabemittel dazu ausgebildet, zustandsabhängig an zumindest einer ersten Zelle (PAE) einen ersten und an zumindest einer weiteren Zelle (PAE) einen weiteren Takt vorzugeben.

Es wird also vorgeschlagen, unterschiedliche Zellen mit unterschiedlicher Taktung zu betreiben. Der weitere Takt wird in der Regel auf den ersten bezogen sein, also in definierter Phasenlage zu diesem stehen. Dazu wird, um optimale Datenverarbeitungsergebnisse, insbesondere sowohl im Hinblick auf die benötigte Datenverarbeitungszeit als auch den Energieverbrauch der gesamten Datenverarbeitungseinheit zu erzielen, vorgeschlagen, dass die Taktung zustandsabhängig erfolgt, dass also nicht etwa abhängig von einem jeweiligen Zustand allen Zellen gemeinsam ein Takt vorgegeben wird, sondern jeder Zelle abhängig vom Zustand ein geeigneter Takt zugeordnet wird.

Weiterhin wird vorgeschlagen die Taktung global konfigurierbar zu gestalten, derart dass eine Einstellung (Konfiguration) die Taktung der Gesamtzahl von Zellen gemeinsam beeinflußt.

Es ist möglich und gewünscht, wenn das Taktvorgabemittel dazu ausgebildet ist, den Solltakt für wenigstens eine erste Zelle von einer Konfigurationszustände vorgebenden Einheit zu empfangen. Dies ermöglicht es, die Taktung der Zelle abhängig von ihrer Konfigurierung bereits dann zu wählen, wenn diese Konfigurierung festgelegt wird. Dies hat den Vorteil, dass problemfrei eine Konfigurierung erfolgen kann.

Bei der Konfigurationszustände vorgebenden Einheit kann es sich einerseits um eine Compilereinheit handeln, das heißt, es wird bereits beim Compilieren des Programmes die erforderliche oder gewünschte Taktung der Zelle festgelegt. Wenn die Compilereinheit die Konfigurationszustände vorgibt, kann die Zellkonfigurationsvorgabeeinheit die Taktung zur Zellkonfiguration an eine zu konfigurierende Zelle übermitteln. Dies ist vorteilhaft, weil es möglich ist, dann lediglich das Konfigurationswort beziehungsweise den Konfigurationsbefehl, mit dem die Konfiguration einer Zelle festgelegt wird, um eine taktbestimmende Angabe zu erweitern, ohne dass weitere Maßnahmen erforderlich sind, wie beispielsweise die Implementierung von taktvergebenden Bussen, auf denen die taktfestlegenden Signale separat übermittelt werden oder dergleichen; dass dies aber prinzipiell möglich ist, sei erwähnt.

Es kann auch vorgesehen werden, dass das Taktvorgabemittel dazu ausgebildet ist, den Solltakt beziehungsweise ein taktbeeinflussendes Signal von einer der weiteren Logikzellen, insbesondere einer konfigurierbaren Logikzelle zu empfangen. Dies ist insbesondere dann vorteilhaft, wenn in einer ersten Logikzelle auf ein Eingangssignal einer externen Einheit gewartet wird und erst bei Eintreffen derartiger Signale die nachfolgend eintreffenden Signale verarbeitenden Zellen aktiviert werden sollen. Es kann so ein Logikfeldschlafmodus implementiert werden, bei dem nur eine oder eine Vielzahl von Zellen auf einem - gegebenenfalls sehr geringen Niveau, d.h. bereits sehr langsamer Taktung - aktiviert sind und das verbleibende Feld extrem langsam getaktet wird. Die dann erforderlichen Taktfrequenzen im Restfeld sind abhängig von den physikalisch nötigen Taktungen, die zum Erhalt von Speicherinhalten oder dergleichen erforderlich sind.

Es ist auch dann vorteilhaft, ein taktbeeinflußendes Signal von einer anderen Logikzelle zu empfangen, wenn mit einer Logikzelle eine oder eine Reihe einer Vielzahl unterschiedlicher arithmetischer und/oder logischer Operationen ausgeführt werden kann, die zumindest zum Teil eine unterschiedliche Anzahl von Taktzyklen erfordern, ohne dass dies vorher von der Compilereinheit vollständig festgelegt werden kann. Auch in einem solchen Fall brauchen die nachfolgenden Zellen nicht zwingend mit hoher Taktfrequenz betrieben werden, wenn sie durch entsprechende, den Zustand der in einer Verarbeitungssequenz mitwirkenden Zelle anzeigenden Signale entsprechend herunter getaktet werden.

In einer bevorzugten Variante umfasst das Taktvorgabemittel eine Zentraltaktvorgabeeinheit, beispielsweise einen zentralen Taktgenerator, dessen Takt über eine Taktleitung an die einzelnen Zellen übertragen wird, sowie eine Lokaltaktgeneriereinheit zur Generierung eines Lokaltaktes aus und/oder im Ansprechen auf den über die Taktleitung übertragenen zentralen Takt. In einer möglichen Ausgestaltung kann die Taktung der Zentraltaktvorgabeeinheit durch eine Konfiguration beeinflußt bzw. eingestellt werden. Es ist bevorzugt, wenn die Lokaltaktgeneriereinheit durch einen Frequenzteiler und/oder Frequenzvervielfacher realisiert ist und das Frequenzteilerverhältnis bestimmt wird durch die Vorgaben des Taktvorgabemittels gemäß der zustandsabhängigen Taktfestlegung.

In einer bevorzugten Variante umfassen die Logikzellen oder zumindest einige der Logikzellen wenigstens eine ALU und/oder sind durch eine solche gebildet. Es ist möglich und bevorzugt, wenn einige der Logikzellen wenigstens eine Speicher- und/oder Registereinheit enthalten, die den restlichen Logikzellen zugeordnet werden kann. Insbesondere kann diese für zu verarbeitende Daten und/oder Konfigurationen der Zelle vorgesehen sein.

Es ist möglich, dass eine Vielzahl von Logikzellen identisch sind und diese mit unterschiedlicher Taktung entsprechend ihrer jeweiligen Konfiguration betrieben werden. Insbesondere ist es möglich, dass alle Logikzellen identisch sind.

Schutz wird auch beansprucht für ein Verfahren zum Betreiben eines in unterschiedliche Konfigurationszustände bringbaren Feldes getakteter Logikzellen, wobei zumindest zeitweilig für wenigstens eine erste Zelle ein erster Zustand bestimmt wird, abhängig vom ersten Zustand ein der ersten Zelle zuzuordnender Takt ermittelt und die Zelle mit diesem Takt betrieben wird, für wenigstens eine weitere Zelle ein zweiter Zustand bestimmt wird, abhängig vom zweiten Zustand ein der zweiten Zelle zuzuordnender zweiter Takt ermittelt und die zweite Zelle mit diesem vom ersten Takt verschiedenen zweiten Takt betrieben wird.

Wie vorerwähnt, kann die Taktung mit der Konfiguration zusammen vorgegeben werden. Der Zustand ist dann der Konfigurationszustand und/oder durch diesen wenigstens mitbestimmt.

Typisch werden bei bekannten und konfigurierbaren Logikzellen Zellen gruppenweise zur Ausführung komplexer Operationen zusammen gefasst. Wenn dabei einzelne der Zellen Teiloperationen ausführen, die in weniger Taktzyklen ablaufen, als dies bei jenen Zellen der Fall ist, die mit besonders langwierigen Teiloperationen der komplexen Gesamtoperationen, welche die Gruppe ausführt, ist es bevorzugt, wenn diese Zellen mit unterschiedlichen Taktraten betrieben werden, und zwar so, dass die Zellen für weniger komplexe Operationen, also für Operationen, die in weniger Taktzyklen ablaufen, langsamer getaktet werden als die anderen Zellen; insbesondere ist es bevorzugt, wenn die Zellen einer Gruppe insgesamt so getaktet sind, dass die Anzahl von Leerzyklen innerhalb der Gruppe minimiert ist. Eine Alternative und/oder Ergänzung hierzu besteht darin, mit weniger komplexen Aufgaben belastete Zellen temporär für bestimmte Taktzykluszahlen umzunützen, also während einer festen Anzahl von Taktzyklen anders zu nutzen.

Insbesondere kann der Fall eintreten, dass die maximale Taktrate von PAEs und/oder PAE-Gruppen durch deren Funktion und insbesondere Vernetzung begrenzt wird. Besonders mit fortschreitender Halbleitertechnologie spielt die Laufzeit von Signalen über Bussysteme eine verstärkt frequenzlimitierende Rolle. Das Verfahren erlaubt nunmehr die langsamere Taktung solcher PAEs und/oder PAE-Gruppen, während andere PAEs und/oder PAE-Gruppen mit einer anderen, gegebenenfalls höheren, Frequenz arbeiten. In einer vereinfachten Ausführung wird vorgeschlagen, die Taktrate des gesamten rekonfigurierbaren Bausteines (VPU) von der maximalen Taktrate der langsamsten PAE und/oder PAE-Gruppe abhängig zu machen. Mit anderen Worten kann die Zentraltaktvorgabeeinheit derart konfiguriert werden, dass der höchste gemeinsame Betriebstakt aller PAEs und/oder PAE-Gruppen (quasi der kleinste gemeinsame Nenner aller Maximaltaktraten) global für alle PAEs generiert wird.

Das Verfahren wie vorstehend beschrieben ist besonders dann vorteilhaft, wenn die Zellen der Gruppe Daten sequentiell verarbeiten, das heißt, das Ergebnis, welches eine Zelle bestimmt hat, an eine oder mehrere nachfolgend Daten verarbeitende Zellen weitergereicht wird.

Es sei erwähnt, dass neben der Priorisierung von Aufgaben innerhalb des Zellfeldes zur Taktvorgabe auch der Zustand einer Leistungsquelle zur Zelltaktungsbestimmung herangezogen werden kann. Insbesondere kann für mobile Anwendungen bei Abfallen einer Versorgungsspannung die Taktung insgesamt herunter gesetzt werden. Gleichfalls ist ein Heruntertakten zur Übertemperaturverhinderung im Ansprechen auf ein Temperatursensorsignal oder dergleichen möglich. Die benutzervorgegebene Taktungsvorgabe ist ebenfalls möglich. Verschiedene Parameter können gemeinsam den taktungsbestimmenden Zustand festlegen.

Vorstehend wurde bereits erwähnt, dass es möglich ist, ein Zeitmultiplexing zum Ausführen mehrerer Konfigurationen auf derselben PAE vorzunehmen. Ein besonders ressourcensparendes Zeitmultiplexing zum Ausführen mehrerer Konfigurationen auf derselben PAE wird dabei durch eine bevorzugte und erweiterte Ausgestaltung möglich, die auch unabhängig von der unterschiedlichen Taktung einzelner Zellen Vorteile aufweisen kann, etwa dann, wenn Latenzzeiten zu beachten sind, wie sie sich bei der Signalübertragung digitaler Daten, seien es Konfigurationsdaten, zu bearbeitende Daten oder dergleichen über einen Bus ergeben. Diese Probleme werden besonders gravierend, wenn rekonfgurierbare Bausteine mit zum Teil vergleichsweise weit voneinander entfernten rekonfigurierbaren Einheiten mit hohen Taktfrequenzen betrieben werden sollen. Dabei entsteht nämlich das Problem, dass durch den besonderen Aufbau von VPUs eine Vielzahl von beliebigen PAEs über Busse verbunden sind und ein nicht unwesentlicher Datenübertragungsaufwand über die Busse besteht. In modernen und v.a. zukünftigen Siliziumtechnologien wird die Schaltfrequenz von Transistoren weiter ansteigen, während die Signalübertragung über Busse verstärkt zu einem performanceeinschränkenden Faktor wird. Vorgeschlagen wird daher, die Datenrate bzw. Frequenz auf den Bussen gegenüber der Arbeitsfrequenz der datenverarbeitenden PAEs zu entkoppeln.

Eine besonders einfache und für einfache Implementierungen bevorzugte Ausgestaltung arbeitet dann derart, dass die Taktrate einer VPU nur global einstellbar ist. Mit anderen Worten kann ein einstellbarer Takt für sämtliche PAEs vorgegeben werden bzw. von einer übergeordneten Konfigurationseinheit (CT) konfiguriert werden. Sämtliche Parameter, die einen Einfluß auf die Taktung haben, bestimmen diesen einen globalen Takt. Beispielsweise können solche Parameter eine Temperaturbestimmung, eine Energiereservemessung von Batterien, etc. sein.

Insbesondere kann ein bestimmender Parameter die maximale Ausführungsfrequenz der langsamsten Konfiguration sein, die sich abhängig von einer PAE-Konfiguration beziehungsweise einer Konfiguration einer Gruppe von PAEs ergibt. Es wurde erkannt, dass insbesondere im Bussignaltransfer begrenzten Anwendungen Konfigurationen unterschiedliche Maximalfrequenzen aufweisen können, weil unterschiedliche Konfigurationen unterschiedlich viele PAEs über unterschiedlich lange Strecken von Busverbindungen umfassen können. Konfigurationen können unterschiedliche Maximalfrequenzen aufweisen, wie z.B. von FPGAs bekannt, die von der jeweiligen Funktion der PAEs und insbesondere von den Längen von Busverbindungen abhängen. Die langsamste Konfiguration stellt dann sicher, dass der ordentliche Betrieb auch dieser Konfiguration sichergestellt ist und verringert zugleich den Energiebedarf aller anderen Konfigurationen, was insbesondere dann vorteilhaft ist, wenn unterschiedliche Teile der Datenverarbeitung, wie sie durch die anderen Konfigurationen, die gegebenenfalls mit höheren Taktfrequenzen laufen würden, nicht vor der langsamsten Konfiguration benötigt würden. Auch in Fällen, in denen absolut sicher gewährleistet sein muss, dass ordnungsgemäßer Betrieb erfolgt, ist oftmals der gegebenenfalls nur geringe Performanceverlust durch Heruntertaktung anderer Konfigurationen, die per se schneller laufen könnten, ohne weiteres hinnehmbar.

In einer optimierten Ausführung wird die Frequenz nur den Konfigurationen angepasst, die aktuell auf einer VPU ausgeführt werden, mit anderen Worten kann die globale Frequenz mit jeder Konfiguration neu eingestellt/konfiguriert werden.

In einer erweiterten Ausführung kann sodann der Takt global, als auch wie bereits beschrieben für jedes konfigurierbare Element einzeln konfiguriert werden.

Es sei erwähnt, dass verschiedene Varianten einzeln oder in Kombination möglich sind. Um Näheres beispielhaft zu offenbaren, wird im Folgenden, ohne dass dies zwingend der Fall sein müsste, davon ausgegangen, dass der Takt bei jeder PAE einzeln gesteuert werden kann. Dann ergeben sich beispielsweise folgende Möglichkeiten:

### a) Gesteuerte Takt An- und Abschaltung

Bevorzugt ist der Verarbeitungstakt von PAEs abgeschaltet, das heißt die PAEs arbeiten nur im Bedarfsfall, wobei die Taktfreischaltung, also das Aktivschalten der PAE beispielsweise unter Vorliegen zumindest einer der folgenden Bedingungen erfolgen kann, nämlich wenn gültige Daten anliegen; das Ergebnis der vorhergehenden Berechung abgenommen wurde; aufgrund eines oder mehrerer Triggersignale; aufgrund einer erwarteten oder gültigen Zeitmarke, vergleiche DE 101 10 530.4 (PACT18).

Dabei kann jede einzelne Bedingung entweder einzeln herangezogen werden, um die Taktfreischaltung zu bewirken, oder in Verknüpfung mit anderen Bedingungen, wobei anhand der logischen Verknüpfung der Bedingungen die Taktfreischaltung berechnet wird. Dass es möglich ist, während eines abgeschalteten Taktes die PAEs in einen stromsparenden Betriebsmodus zu versetzen, beispielsweise mit zusätzlich teilweise abgeschalteter oder verringerter Stromversorgung, beziehungsweise, sollte es aus anderen Gründen erforderlich sein, extrem weit herabgesetzten Schlaftakten, sei erwähnt.

### b) Unterschiedliche Frequenzen je PAE

Aus WO 98/26356 (PACT02/PCT), WO 98/29952 (PACT04/PCT), WO 00/77652 (PACT13/PCT) sind Technologien zur Steuerung von sequentiellen Abläufen in VPUs bekannt. In WO 98/29952 (PACT04/PCT) werden spezielle Sequenzer aufgebaut (SWTs), die eine Menge von PAEs ansteueren und für deren (Re-)Konfiguration verantwortlich sind. Die (Re)Konfiguration wird durch Statussignale die von den PAEs generiert werden (Trigger) und an die SWTs weitergeleitet werden gesteuert, und zwar dadurch, daß die SWT auf die Trigger reagiert und die entsprechende Fortsetzung einer Sequenz von den Triggern abhängig macht.

In WO 98/26356 (PACT02/PCT) ist den einzelnen PAEs jeweils ein kleiner Speicher für deren Konfiguration zugeordnet. Ein Sequenzer durchläuft den Speicher und adressiert die einzelnen Konfigurationen. Der Sequenzer wird durch Trigger und/oder dem Status seiner PAE (in die er beispielsweise integriert ist) gesteuert.

Während der Datenverarbeitung ist es nunmehr möglich, daß unterschiedliche Sequenzer in unterschiedichen PAEs eine unterschiedliche Menge an Operationen pro übertragenem Datenpaket durchzuführen haben (vgl. DE 101 39 170.6 (PACT11), DE 101 42 903.7 (PACT11a), DE 101 44 732.9 (PACT11b), DE 101 45 792.8 (PACT11c), DE 101 54 260.7 (PACT11d), DE 102 07 225.6 (PACT11e), WO 00/77652 (PACT13/PCT)). Dies sei am Beispiel einer Konfiguration beschrieben, bei welcher 3 Sequenzer mit der Bearbeitung eines Datenpaketes befasst sind und eine unterschiedliche Anzahl von Operationen zur Datenpaketverarbeitung benötigen. Beispiel:
- Sequenzer 1 (Seq1) benötigt 10 Operationen um ein Datenpaket zu verarbeiten
- Sequenzer 2 (Seq2) benötigt 5 Operationen um ein Datenpaket zu verarbeiten
- Sequenzer 3 (Seq3) benötigt 20 Operationen um ein Datenpaket zu verarbeiten

Um ein optimales Arbeits-/Stromverbrauchsverhältnis zu erhalten, wären die einzelnen Sequenzer wie folgt zu takten: Fmax = F_{Seq2} / 4 = F_{Seq1} /2 = F_{Seq3}
oder bei einer maximalen Arbeitsfrequenz von beispielsweise 100MHz: F_{Seq1} = 50MHz, F_{Seq2} = 25MHz, F_{Seq3} = 100MHz

Es wird als besonders vorgeschlagen, je PAE und/oder Gruppe von PAEs unterschiedliche Taktquellen zu verwenden. Dazu können beispielsweise verschiedene Techniken einzeln oder gemeinsam angewendet werden:
1) Individuell pro PAE programmierbare Taktteiler, die ausgehend von einem oder mehreren gemeinsamen Basistakten ein jeweils individuell konfigurierbares Teilerverhältnis ermöglichen.
2) Individuell pro PAE programmierbare Taktvervielfacher (PLLs), die ausgehend von einem oder mehreren gemeinsamen Basistakten ein jeweils individuell konfigurierbares Teilerverhältnis ermöglichen.
3) Ableitung des jeweiligen PAE-Taktes aus dem Datenstrom der jeweils zu verarbeitenden Daten, z.B. durch Oversampling.

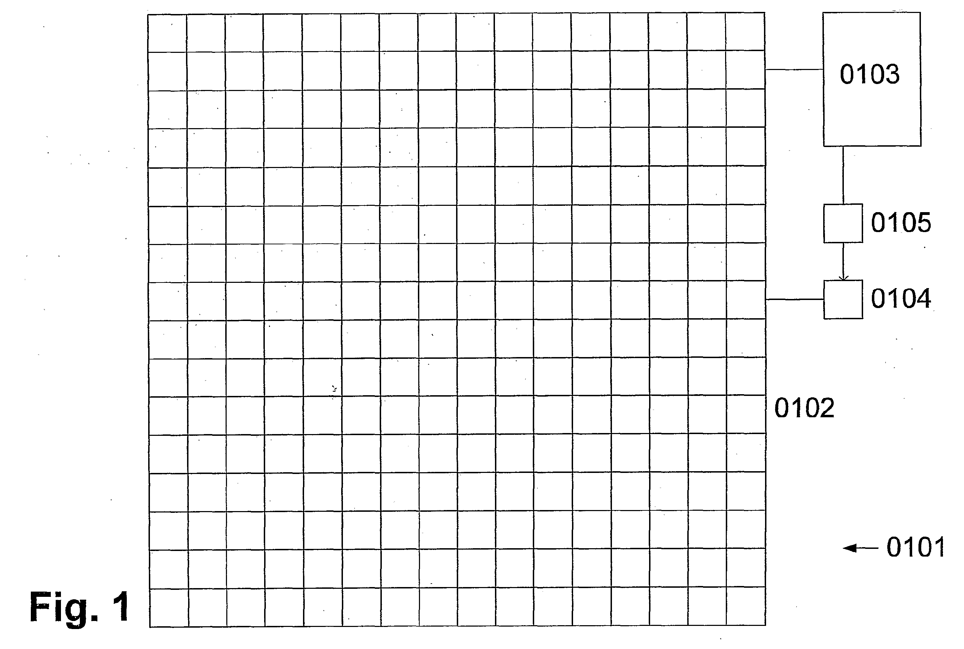

Ein Ausführungsbeispiel mit unterschiedlichen Algorithmen ist in Figur 1 dargestellt.

### c) Konfigurationstakt

Eine Optimierung des Energieverbrauches wird auch dadurch begünstigt, dass die Schaltungsteile, die zur Durchführung einer Konfiguration notwendig sind, selektiv getaktet werden, d.h. es wird vorgeschlagen, je adressierter PAE zu takten und/oder den Takt jener Schaltungsteile, die zur Durchführung einer Konfiguration beziehungsweise Rekonfiguration erforderlich sind, vollständig abzuschalten, wenn keine Konfiguration beziehungsweise Rekonfiguration durchgeführt wird und/oder statische Register zu verwenden.

In besonderen Ausgestaltungen kann die Arbeitsfrequenz der PAEs oder Gruppen von PAEs von unterschiedlichen und/oder weiteren Faktoren abhängig gemacht werden. Es sei nachfolgend beispielhaft folgendes aufgeführt:
1. Temperaturmessung
   Erreicht die Arbeitstemperatur bestimmte Schwellwerte, wird der Arbeitstakt entsprechend reduziert. Gegebenenfalls kann die Reduktion selektiv erfolgen, indem zunächst jene PAEs mit einem geringeren Takt betrieben werden, die den irrelevantesten Verlust an Performance darstellen.
   In einer besonders bevorzugten Ausgestaltung können mehrere Temperaturmessung in unterschiedlichen Regionen durchgeführt werden und die Taktung jeweils lokal angepasst werden.
2. Pufferfüllstände
   Aus DE 102 06 653.1 (PACT15), DE 102 07 224.8 (PACT15a), DE 102 08 435.1 (PACT15b) sind IO-FIFOs (Eingangs-Ausgangs-First-In-First-Out-Schaltkreise) bekannt, die periphere Datentransfers von der Datenverarbeitung innerhalb einer VPU entkoppeln. Beispielsweise kann ein Puffer für Eingangsdaten (Input-Buffer) und/oder ein Puffer für Ausgangsdaten (Output-Buffer) implementiert sein. Eine besonders effiziente Größe zur Taktfrequenzbestimmung kann beispielsweise durch den Füllgrad der jeweiligen Daten-Puffer bestimmt werden. Beispielsweise können folgende Effekte und Wirkungen auftreten:
   a) Ein Input-Buffer ist weitgehend voll und/oder der Füllgrad steigt stark an: Erhöhung der Taktung, um die Abarbeitung zu beschleunigen.
   b) Ein Input-Buffer ist weitgehend leer und/oder der Füllgrad sinkt stark an: Verringerung der Taktung, um die Abarbeitung zu verlangsamen.
   c) Ein Output-Buffer ist weitgehend voll und/oder der Füllgrad steigt stark an: Verringerung der Taktung, um die Abarbeitung zu verlangsamen.
   d) Ein Output-Buffer ist weitgehend leer und/oder der Füllgrad sinkt stark an: Erhöhung der Taktung, um die Abarbeitung zu beschleunigen.

   Je nach Applikation und System können entsprechend geeignete Kombinationen angewendet werden.
   Es sei darauf hingewiesen, dass eine derartige Taktfrequenzbestimmung implementierbar ist, wenn ein Füllgradbestimmungsmittel für einen Puffer, insbesonders einen Eingangs- und/oder Ausgangspuffer, alternativ aber auch Zwischenpuffer innerhalb eines VPU-Arrays, vorgesehen ist und dieses Füllgraderfassungsmittel mit einem Taktvorgabemittel zur Vorgabe einer Logikzellentaktung verbunden ist, damit dieses die Logikzellentaktung im Ansprechen auf den Pufferfüllgrad verändern kann.
3. Batteriezustand
   Für mobile Geräte ist ein sorgsamer Umgang mit der Stromversorgung z.B. Batterie zwingend erforderlich. Abhängig von der Energiereserve, die nach bestehenden Methoden entsprechend des Stand der Technik bestimmt werden kann, wird die Frequenz von PAEs und/oder Gruppen von PAEs bestimmt, insbesondere bei geringer Energiereserve reduziert.

Es ist möglich, neben oder zusätzlich zur Optimierung der Datenverarbeitungstaktung auch eine Optimierung des Datentransfers respektive des Verhältnisses zwischen Datentransfer und Datenverarbeitung zu erreichen.

In einer besonderen Ausgestaltung können die beschriebenen Taktsteuerungen von PAEs derart erweitert werden, dass - beispielsweise unter Verwendung einer sequenzerähnlichen Ansteuerung und eines geeigneten Registersatzes - mehrere bevorzugt unterschiedliche Konfigurationsworte in mehreren Takten nacheinander ausgeführt werden können. Dazu kann den Konfigurationsregistern und/oder einem - eventuell auch abgekoppelten und separat implementieren - Konfigurationsspeicher (vgl. DE 102 06 653.1 (PACT15), DE 102 07 224.8 (PACT15a), DE 102 08 435.1 (PACT15b)) ein Sequenzer zugeordnet werden, der eine Anzahl von Konfigurationseinträgen sequentiell abarbeitet. Der Sequenzer kann als Mikrokontroller ausgestaltet sein. Insbesondere kann der Sequenzer in seiner Funktion programmierbar/konfigurierbar sein, wie beispielsweise der Baustein EPS448 von Altera [ALTERA Data Book 1993]. Mögliche Ausgestaltungen derartiger PAEs sind beispielsweise in den Patentanmeldungen WO 98/26356 (PACT02/PCT), WO 98/29952 (PACT04/PCT), WO 00/77652 (PACT13/PCT), DE 101 10 530.4 (PACT18), DE 102 06 653.1 (PACT15), DE 102 07 224.8 (PACT15a), DE 102 08 435.1 (PACT15b) beschrieben, die zu Offenbarungszwecken vollumfänglich eingegliedert werden.

Es wird für das Nachfolgende zunächst davon ausgegangen, dass mehrere Konfigurationsworte zu einer Konfiguration (PACKEDCONF) zusammengefaßt und auf eine PAE konfiguriert werden. Die PACKEDCONF wird derart abgearbeitet, dass die einzelnen Konfigurationsworte zeitlich nacheinander ausgeführt werden. Der Datenaustausch und/oder Statusaustausch zwischen den einzelnen zeitlichen Konfigurationen erfolgt durch eine geeignete Datenrückkopplung in den PAEs, beispielsweise durch einen geeigneten Registersatz und/oder ein anderes Daten- und/oder Statusaustauschmittel, wie geeignete Speicher und dergleichen.

Dieses Verfahren erlaubt ein unterschiedliches Timing für PAEs und Bussysteme. Während PAEs beispielsweise mit sehr hohen Taktraten Daten verarbeiten, werden Operanden und/oder Ergebnisse nur mit einem Bruchteil der Taktrate der PAEs über einen Bus übertragen. Die Übertragungszeit über den Bus kann entsprechend länger sein.

Es ist bevorzugt, wenn nicht nur die PAEs oder andere Logikeinheiten in einem konfigurierbaren und/oder rekonfigurierbaren Baustein mit unterschiedlicher Geschwindigkeit taktbar sind, sondern auch eine unterschiedliche Taktung von Teilen eines Bussystems vorgesehen wird. Dabei ist es möglich, entweder mehrere parallele Busse vorzusehen, die unterschiedlich schnell getaktet werden, etwa einen Bus, der besonders hoch getaktet wird, um eine hochperformante Verbindung vorzusehen, parallel zu einem niedriger getakteten Bus, der eine stromsparende Verbindung vorsieht. Die hochgetakte Verbindung kann dann verwendet werden, wenn längere Signalwege ausgeglichen werden müssen, oder wenn eng beieinanderliegende PAEs mit hoher Frequenz arbeiten und demgemäß auch mit hoher Frequenz Daten austauschen müssen, um hier über kurze Entfernungen, in welchen die Latenzzeit eine allenfalls geringe Rolle spielt, eine gute Übertragung vorzusehen. Es wird somit in einer möglichen Ausgestaltung vorgeschlagen, dass eine Anzahl lokal zueinander angeordneter PAEs zu einer Gruppe zusammengefaßt mit einer hohen Frequenz ggf. auch sequentiell arbeitet und lokale und entsprechend kurze Bussysteme der Datenverarbeitungsrate der Gruppe entsprechend hoch getaktet werden, während die Operanden zuführenden oder Ergebnisse abführenden Bussysteme langsamere Takt- und Datentransferraten aufweisen. Alternativ wäre es möglich, innerhalb einer Gruppe aus PAEs zu Zwecken der Energieverbrauchsoptimierung eine langsame Taktung vorzunehmen und Daten mit hoher Geschwindigkeit zuzuführen, etwa wenn eine Vielzahl von einströmenden Daten mit nur geringem Operationsaufwand, also niedrigen Taktzahlen gearbeitet werden kann.

Neben der Möglichkeit Bussysteme vorzusehen, die mit unterschiedlicher Frequenz getaktet werden, ist es auch möglich, überhaupt mehrere unabhängig voneinander betreibbare Bussysteme vorzusehen und dann die PAEs multiplexartig wie erforderlich aufzuschalten. Dies ermöglicht es schon für sich genommen, und unabhängig von der immer noch gegebenen Möglichkeit einer unterschiedlichen Taktung unterschiedlicher Bussysteme oder unterschiedlicher Bussystemteile, rekonfigurierbare Bausteine besonders effizient im Ressourcenmultiplexing zu betreiben. Es ist dabei möglich, unterschiedlichen Ressourcen nach unterschiedlichen Multiplexingverfahren unterschiedliche Konfigurationen zuzuteilen.

Insbesondere kann eine Gruppe von PAEs als Prozessor entsprechend WO 00/77652 (PACT13/PCT) ausgestaltet sein.

In den nachfolgenden Ausführungen werden beispielsweise datenverarbeitenden PAEs mittels eines Zeitmultiplexings verschiedenen Konfigurationen zugewiesen, während Bussysteme mittels eines Raummultiplexings den verschiedenen Konfigurationen zugewiesen werden.

Bei der Zuweisung von Ressourcen, das heißt der vom Compiler oder einer ähnlichen Einheit vorzunehmenden Zuweisung von Aufgaben an PAEs beziehungsweise eine Guppe von PAEs kann das gegebene Feld dann betrachtet werden als ein Feld der n-fachen Größe und es können Codeteile in dieses um den Faktor n virtuell vergrößerte Feld an Ressourcen übertragen werden, ohne dass Probleme auftreten, vor allem dann, wenn Codeteile so erteilt werden, dass in eine multiplexartig verwendete PAE keine voneinander abhängigen Codeteile einkonfiguriert werden müssen.

In der bisherigen Betrachtung bestand eine PACKEDCONF aus mindestens einem Konfigurationswort oder einer Bündelung von Konfigurationsworten für PAEs, die zu einer einzigen Applikation gehören. Mit anderen Worten wurden in PACKEDCONF nur zusammengehörende Konfigurationsworte zusammengefaßt.

In einer erweiterten Ausgestaltung werden mindestens eines oder mehrere Konfigurationsworte je unterschiedlicher Konfigurationen in eine PACKEDCONF aufgenommen, derart dass jeweils das Konfigurationswort oder die Konfigurationsworte, die zu einer Konfiguration zusammengehören als Konfigurations-Gruppe zusammengeschlossen sind und sodann die entstehenden Konfigurations-Gruppen in das PACKEDCONF zusammengefaßt werden.

Die einzelnen Konfigurations-Gruppen können zeitlich nacheinander ausgeführt werden, also in einem Zeitmultiplexing mit einer zeitscheibenartigen Zuweisung. Dadurch entsteht ein Zeitmultiplexing unterschiedlicher Konfigurations-Gruppen auf einer PAE. Das Konfigurationswort oder die Konfigurationworte innerhalb einer Konfigurations-Gruppe können ebenfalls wie vorstehend beschrieben zeitlich nacheinander ausgeführt.

Den Konfigurationsregistern und/oder einem - eventuell auch abgekoppelten und separat implementieren - Konfigurationsspeicher (vgl. DE 102 06 653.1 (PACT15), DE 102 07 224.8 (PACT15a), DE 102 08 435.1 (PACT15b)) werden Multiplexer zugeordnet, die eine der Konfigurations-Gruppen auswählen. In einer erweiterten Ausführung kann weiterhin ein Sequenzer (wie bereits beschrieben) zugeordnet sein, der die sequentielle Abarbeitung von Konfigurationsworten innerhalb von Konfigurations-Gruppen ermöglicht.

Durch die Multiplexer und optionalem Sequenzer kann eine Ressource (PAE) in einem Zeitmultiplexverfahren mehreren unterschiedlichen Konfigurationen zugeordnet werden. Unterschiedliche Ressourcen können die jeweils anzuwendende Konfigurations-Gruppe untereinander synchronisieren, beispielsweise durch Übertragung einer Konfigurations-Gruppennummer oder eines Zeigers.

Die Ausführung der Konfigurations-Gruppen kann linear hintereinander und/oder zyklisch erfolgen. Eine Priorisierbarkeit sei erwähnt. Besonders hervorzuheben ist, dass hierbei unterschiedliche Sequenzen in einem einzigen Prozessorelement abgearbeitet werden können und dass dazu zugleich unterschiedliche Bussysteme vorgesehen sein können, sodass mit dem Aufbau einer Busverbindung, die aufgrund der langen Übertragungswege andauern kann, keine Zeit vergeudet wird. Wenn eine PAE ihre erste Konfiguration einem ersten Bussystem zuordnet und bei Ausführung der ersten Konfiguraton an dieses ankoppelt, kann sie, wenn räumliches Multiplexing für das Bussystem möglich ist, in einer zweiten Konfiguration auf ein davon verschiedenes oder partiell verschiedenes Bussystem aufkoppeln beziehungsweise daran ankoppeln.

Die Ausführung einer Konfigurations-Gruppe, jede Konfigurations-Gruppe bestehend aus einem oder mehreren Konfigurationsworten, kann von dem Eintreffen einer Ausführungsfreigabe durch Daten und/oder Triggern und/oder einer Ausführungsfreigabebedingung abhängig gemacht werden.

Ist die Ausführungsfreigabe(-bedingung) für eine Konfigurations-Gruppe nicht gegeben, kann entweder auf die Ausführungsfreigabe(-bedingung) gewartet werden oder mit der Ausführung einer nachfolgenden Konfigurations-Gruppe fortgefahren werden. Während des Wartens auf eine Ausführungsfreigabe(-bedingung) gehen die PAEs bevorzugt in einen stromsparenden Betriebsmodus, beispielsweise mit abgeschaltetem Takt (Gated Clock) und/oder teilweise abgeschalteter oder verringerter Stromversorgung. Kann keine Konfigurations-Gruppe aktiviert werden, gehen PAEs bevorzugt ebenfalls in einen stromsparenden Betriebsmodus wie vorerwähnt.

Die Speicherung der PACKEDCONF kann unter Verwendung eines Ringspeichers oder anderer Speicher- beziehungsweise Registermittel erfolgen, wobei die Verwendung eines Ringspeichers zur Folge hat, dass nach Ausführung des letzten Eintrages wieder mit der Ausführung des erstens begonnen werden kann (vgl. WO 98/29952 (PACT04/PCT)). Es sei erwähnt, dass innerhalb der PACKEDCONF und/oder einer Konfigurationsgruppe auch direkt und/oder indirekt und/oder jeweils bedingt in eine besondere Ausführung gesprungen werden kann.

In einem bevorzugten Verfahren können PAEs zur entsprechenden zeitgemultiplexten Abarbeitung von Konfigurationen ausgearbeitet sein. Die Anzahl der Bussysteme zwischen den PAEs wird derart erhöht, dass für eine ausreichende Anzahl von Konfigurations-Gruppen ausreichende Ressourcen zur Verfügung stehen. Mit anderen Worten arbeiten die datenverarbeitenden PAEs in einem Zeitmultiplexverfahren, während die datenübertragenden und/oder datenspeichernden Ressourcen in hinreichender Menge zur Verfügung gestellt sind.

Dies entspricht einer Art Raummultiplexing, wobei ein erstes Bussystem einer ersten zeitweise abgearbeiteten Konfiguration zugeordnet ist und ein zweites, räumlich getrennt von diesem verlaufendes beziehungsweise geführtes Bussystem einer weiteren Konfiguration zugeordnet ist.

Es ist zugleich und/oder alternativ möglich, dass auch die Bussysteme ganz oder partiell im Zeitmultiplexing betrieben werden und sich mehrere Konfigurationsgruppe ein Bussystem teilen. Hierbei kann vorgesehen sein, dass jede Konfigurationsgruppe seine Daten beispielsweise als Datenpaket überträgt, welchem eine Konfigurations-gruppenID zugeordnet ist (vergleiche APID in DE 102 06 653.1 (PACT15), DE 102 07 224.8 (PACT15a), DE 102 08 435.1 (PACT15b)). Es kann dann vorgesehen sein, die jeweils übertragenen Datenpakete anhand der ihnen zugeordneten Identifikationsdaten abzuspeichern, zu sortieren und zwar bei Bedarf und zur Abstimmung der IDs zwischen unterschiedlichen Bussen.

In einem erweiterten Verfahren können auch Speicherquellen zeitlich gemultiplext werden, beispielsweise indem mehrere Segmente implementiert sind und/oder bei einem Wechsel der Konfigurations-Gruppe der oder die entsprechenden Speicher entsprechend WO 98/29952 (PACT04/PCT) und/oder WO 00/77652 (PACT13/PCT) in einen anderen ggf. auch externen Speicher geschrieben oder aus diesem geladen werden. Insbesondere die Verfahren nach DE 102 06 653.1 (PACT15), DE 102 07 224.8 (PACT15a), DE 102 08 435.1 (PACT15b) können Anwendung finden (beispielsweise MMU paging und/oder APID)

Als weitere Möglichkeit zur Ressourcenschonung sei die Anpassung der Betriebsspannung an den Takt erwähnt. Halbleiterprozesse lassen typischerweise höhere Taktfrequenzen zu, wenn sie,bei höheren Betriebsspannungen betrieben werden. Allerdings wird dadurch erheblich mehr Strom verbraucht und ggf. verringert sich auch die Lebensdauer eines Halbleiters.

Ein optimaler Kompromiss kann erreicht werden, indem die Spannungsversorgung von der Taktfrequenz abhängig gemacht wird. Beispielsweise kann bei geringen Taktfrequenzen mit geringer Versorgungsspannung gearbeitet werden. Mit ansteigenden Taktfrequenzen wird die Versorgungsspannung ebenfalls (vorzugsweise bis zu einem definierten Maximum) erhöht.

Die Erfindung wird im folgenden noch weiter beispielhaft dargestellt unter Bezugnahme auf die beigefügte Zeichnung. Es sei erwähnt, dass diese beispielhafte Umschreibung nicht limitierend ist und im Einzelfall in unterschiedlichen Figuren identische oder ähnliche Einheiten mit unterschiedlichen Bezugszeichen belegt sein können.

Figur 1 zeigt beispielhaft eine rekonfigurierbare Datenverarbeitungseinrichtung (VPU) (0101). Einem Array aus unabhängig voneinander konfigurierbaren und rekonfigurierbaren PAEs (0102) ist eine Konfigurationseinheit (CT, 0103) übergeordnet zur Steuerung und Durchführung der Konfiguration und Rekonfiguration. Hierzu sei besonders auf die verschiedenen Anmeldungen des Anmelders und den Offenbarungsgehalt der einleitend unter Bezug genommenen Schriften und Technologien verwiesen. Der Datenverarbeitungseinrichtung ist weiterhin ein Zentraltaktgenerator (0104) zugeordnet. Die Taktrate des Zentraltaktgenerator kann in einer möglichen Ausgestaltnug von der Konfigurationseinheit 0103 vorgegeben werden. Die Taktrate jeder PAE und/oder Gruppen von PAEs und deren Busverbindungen kann in einer möglichen Ausgestaltung ebenfalls von der Konfigurationseinheit 0103 vorgegeben werden.

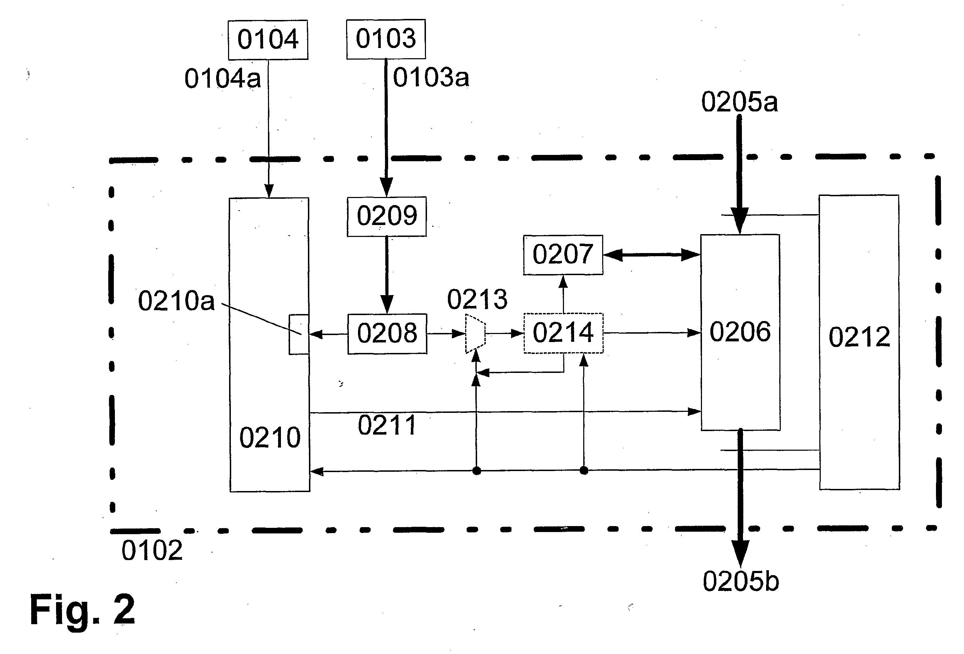

Nach Fig. 2 speist die Konfigurationseinheit 0103 über eine Konfigurationsleitung 0103a konfigurierende Daten in jeweilige Zellen 2, von welchen nur eine beispielhaft dargestellt ist. Weiter wird an die Zelle 0102 das Taktsignal des zentralen Taktgenerators 0104 über eine Taktleitung 0104a gespeist. Die rekonfigurierbare Zelle 0102 kommuniziert über einen Datenbuseingang 0205a und -ausgang 0205b mit anderen Zellen und weist weiter eine datenverarbeitende Einheit beispielsweise eine arithmetische Logikeinheit ALU 0206 auf, sowie bevorzugt einen internen Datenspeicher 0207 und einen Konfigurationsspeicher 0208, in welchem die konfigurierenden Befehle aus der Konfigurationseinheit 0103 über einen Konfigurationsbefehlextraktor 0209 eingespeist werden, um im Ansprechen darauf die datenverarbeitende Einheit beispielsweise ALU 0206 zu konfigurieren. Der Konfigurationsextraktor 0209 ist weiter mit einem Frequenzteilungs/ vervielfachungsfaktorvorgabeeingang 0210a eines Frequenzteilers/Ferquenzvervielfachers 0210 verbunden, welcher dazu ausgebildet ist, das Taktsignal des zentralen Taktgenerators 0104 auf der Taktleitung 0104a entsprechend einem über den Eingang 0210a vorgegebenen Taktverhältnisses zu teilen oder zu vervielfachen und das Taktsignal an die datenverarbeitende Einheit, beispielsweise die arithmetische Logikeinheit ALU 0206 und gegebenenfalls weitere Einheiten der rekonfigurierbaren Zelle 0102 über eine Leitung 0211 zu speisen. 0210 kann durch eine optionale Datenbusüberwachungsschaltung 0212 derart angesteuert werden, dass die Frequenz in Abhängigkeit des Empfangs oder Versendens von Daten gesteuert wird.

Optional kann weiterhin ein Multiplexer 0213 zur Auswahl unterschiedlicher Konfigurationen und/oder Konfigurations-Gruppen in Abhängigkeit von 0212 integriert sein. Der Multplexer kann weiterhin optional durch einen Sequenzer 0214 angesteuert werden, um eine sequentielle Datenverarbeitung zu ermöglichen. Insbesondere dafür können Zwischenergebnisse in dem Datenspeicher 0207 verwaltet werden.

Während die allgemeine Konfiguration der Zelle bereits zum Teil in den einleitend erwähnten Anmeldungen des Anmelders beschrieben wurde, ist wenigstens die vorliegend beschriebene Taktteilungsanordnung, die zugehörige Beschaltung und die Optimierung ihres Betriebs neu, wobei darauf hingewiesen wird, dass diese jeweils mit erforderlichen Hardwareveränderungen einhergehen können und werden.

Die Gesamt-Anordnung und insbesondere die Konfigurationseinheit 0103 ist so gebildet, dass mit einem konfigurierenden Signal, mit welchem ein Konfigurationswort über die Konfigurationsleitung 0103a über den Konfigurationswortextraktor 0209 an die datenverarbeitende Einheit 0206 bzw. den vor- und/oder nach- und/oder zugeordneten Speicher 0208 gespeist wird, auch ein Taktteilungs/vervielfachungssignal ausgesendet, von dem Konfigurationswortextraktor 0209 extrahiert und an den Frequenzteiler/-vervielfacher 0210 gesendet werden kann, damit dieser die datenverarbeitende Einheit 0206 und gegebenenfalls noch andere Einheiten im Ansprechen darauf takten kann. Es sei darauf hingewiesen, dass an Stelle der Einheit 0209 auch andere Möglichkeiten bestehen, im Ansprechen auf ein Eingabesignal an die Zelle die Taktung einer einzelnen datenverarbeitende Einheit 0206 unter Bezugnahme auf eine zentrale Takteinheit 0104 zu variieren, beispielsweise über die Datenbusüberwachungsschaltung 0212.

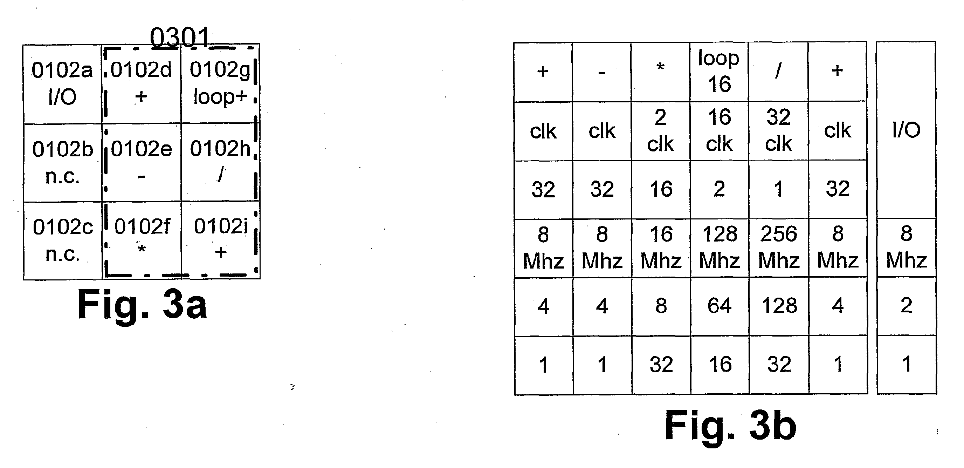

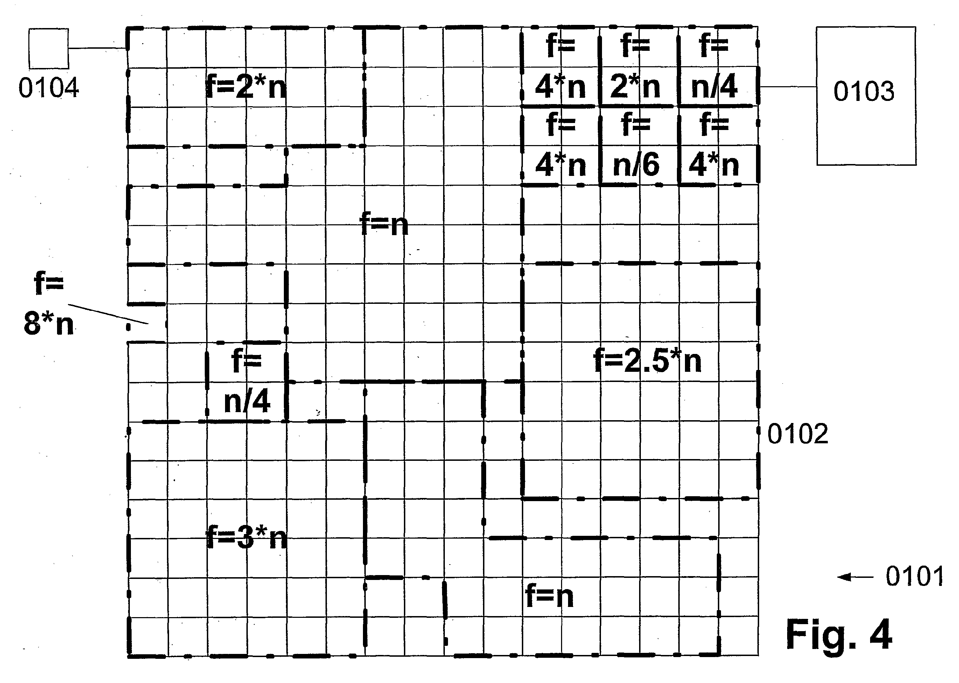

Ein Gesamtfeld aller rekonfigurierbaren Logikeinheiten 0102 kann unter Verwendung der vorstehend beschriebenen Ausbildung, aber gegebenenfalls auch unter anderer Implementierung der Einheiten betrieben werden, wie es nur beispielhaft mit Bezug auf Fig. 3 und 4 beschrieben werden wird:

Nach Fig. 3a ist beispielsweise ein 3x3-Feld rekonfigurierbarer Zellen so konfiguriert, dass eine erste Zelle 0102a zur Auswertung eines Eingang/Ausgang-Signals dient. Die Zellen 0102b, 0102c werden gegenwärtig nicht benötigt und sind demgemäß als nicht konfiguriert (n.c.) bezeichnet. Die Zellen 0102d bis 0102i bilden zusammen eine Gruppe, mit der eine komplexe arithmetische Operation ausgeführt wird, wobei in Zelle 0102d eine Addition, in Zelle 0102e eine Subtraktion, in Zelle 0102f eine Multiplikation erfolgt, in Zelle 0102g eine Schleife durchlaufen wird, innerhalb von welcher eine Mehrfachaddition vorgenommen wird, in Zelle 0102h eine Division erfolgt und in Zelle 0102i wiederum eine Addition. Die Zellen 0102d bis 0102i sind in der durch strichpunktierte Linien angedeuteten Gruppe 0301 so miteinander verbunden, dass Daten sequentiell und pipelineartig von den Zellen abgearbeitet werden. Die Operationen innerhalb der Zellen 0102d und 0102e laufen in unterschiedlich vielen Taktzyklen ab, wie in Tabelle Figur 3b in der zweiten Reihe angedeutet ist. Dort ist die Anzahl der Taktzyklen angegeben und es ist ersichtlich, dass eine Addition oder Subtraktion in einem Taktzyklus ausgeführt werden kann, die Division aber 32 Taktzyklen benötigt. In der dritten Zeile der Tabelle von Figur 3b ist nun angegeben, welcher Wert dem Frequenzteiler jeder Zelle zugeordnet ist, um eine optimale Energienutzung bei doch konstant bleibendem Datendurchsatz durch die Zelle zu erreichen. Nur die Zelle, in welcher die Division stattfindet, wird mit höchstem Takt betrieben; hier ist das Taktverhältnis 1. Diese Zelle benötigt für die ihr zugewiesene Operation am längsten. Da nur alle 32 Takte ein neues Ergebnis an die die Division durchführende Zelle 0102h geliefert werden braucht, sind die Zellen 0102d und 0102e um den entsprechenden Faktor 32 langsamer getaktet; das Frequenzteilerverhältnis für diese Zellen beträgt demgemäß 32, wie in Fig. 3b ersichtlich. Die Multiplikation, die in zwei Taktzyklen abläuft, besitzt dem hingegen ein Frequenzteilerverhältnis 16 und die wiederum aufwendigere Schleife von Zelle 0102g, die in 16 Taktzyklen abläuft, erhält nur ein Frequenzteilerverhältnis von 2 zugewiesen. Diese Taktverhältnisse sind zunächst bei der Konfigurierung, in der die einzelnen Zellen gruppenweise zusammengestellt werden und jeder Zelle innerhalb der Gruppe zugewiesen wird, bekannt, da sie vom Compiler bei der Programmcompilierung bestimmt wurden und können demgemäß in die Zelle bei deren Konfiguration eingegeben werden. In der vierten Reihe von oben ist angegeben, welche Taktrate sich bei einem Zentraltakt von 256 MHz ergibt.

Wird die Prozessoreinheit mit den separat taktbaren rekonfigurierbaren Logikzellen in einer Anwendung betrieben, in der die Spannung abfallen kann, beispielsweise aufgrund sich erschöpfender Kapazitäten einer Spannungsversorgung, so kann vorgesehen werden, dass beispielsweise bei Abfall der Versorgungsspannung auf einen kritischen Wert U1 die Gesamtfrequenz herunter gesetzt wird und es werden dann alle Zellen um die Hälfte langsamer getaktet, so dass auch die Divisionszelle 0102h nur noch mit 128 MHz läuft, während die Zelle 0102d mit 4 MHz getaktet wird. Die Zelle 0102a, die eine mit geringerer Priorität erfolgende Abfrage des Mauszeigers durchführt, wird nicht mehr mit 8 MHz getaktet wie zuvor, sondern nur noch mit 2 MHz, das heißt, es werden abhängig von der Priorisierung bei Spannungsabfall oder unter anderen Umständen den jeweiligen Gruppen unterschiedliche Verlangsamungen je nach Bedeutung der Aufgabe zugewiesen.

Steigt dann aus anderen Gründen noch die Temperatur an, kann die Wärmeerzeugung im Logikzellenfeld durch eine weitere Herabsetzung der Taktraten der Logikzellen weiter verringert werden, wie dies in der letzten Reihe von Fig. 3b angedeutet ist. Es versteht sich, dass wahlweise z.B. ein jeweiliger einzelner Sensor zur Bestimmung des Zustandes wie der Versorgungsspannung und/oder der Temperatur vorgesehen werden kann, dessen Sensorsignal konditioniert an die Zellen gespeist werden kann, eine entsprechende Sensoranordnung jeder Zelle zugeordnet sein kann und/oder gegebenenfalls auch der Zentraltakt veränderbar ist.

Damit läßt sich ein Prozessorfeld energieoptimal betreiben, die erforderlichen Kühlleistungen nehmen ab und es ist einsichtig, dass, da im Regelfall nicht alle Zellen stets mit höchster Taktfrequenz betrieben werden können und/oder müssen, Kühlkörper und dergleichen entsprechend schwächer dimensioniert werden können, was wiederum weitere Kostenvorteile bringt.

Es sei erwähnt, dass neben der Abfrage einer Versorgungsspannung, einer Temperatur, der Priorisierung von Rechnungen und dergleichen weitere Zustände taktbestimmend sein können. So kann beispielsweise ein Hardware- oder Softwareschalter vorgesehen werden, mit dem der Benutzer angibt, dass eine nur geringe Taktung oder eine höhere Taktung gewünscht ist. Dies ermöglicht einen noch sparsameren und gezielten Umgang mit der zur Verfügung stehenden Energie. Es kann dabei insbesondere vorgesehen werden, dass die Zentraltaktrate auf Anforderung eines Benutzers oder auf externe Anforderung insgesamt herabgesetzt werden kann, aber die Taktteilerverhältnisse innerhalb des Zellarrays nicht verändert werden, um, etwa bei Temperaturüberhöhung, das Erfordernis zu vermeiden, alle Zellen neu zu konfigurieren. Überdies sei darauf hingewiesen, dass bei der Bestimmung der Taktraten ein Hystereseverhalten vorgesehen werden kann, etwa dann, wenn temperaturabhängig die Taktfrequenzen verändert werden sollen.

Figur 4 zeigt nochmals die Datenverarbeitungseinrichtung (VPU) nach Figur 1. Unterschiedliche Gruppen innerhalb der VPU werden mit unterschiedlichen Frequenzen f betrieben, die jeweils von einem durch 0104 generierten Frequenznormal n abgeleitet werden. Es soll ausdrücklich erwähnt sein, dass auch mehrere Frequenznormale (n₁...nₙ) von mehreren 0104 generiert und innerhalb einer VPU verwendet werden können.

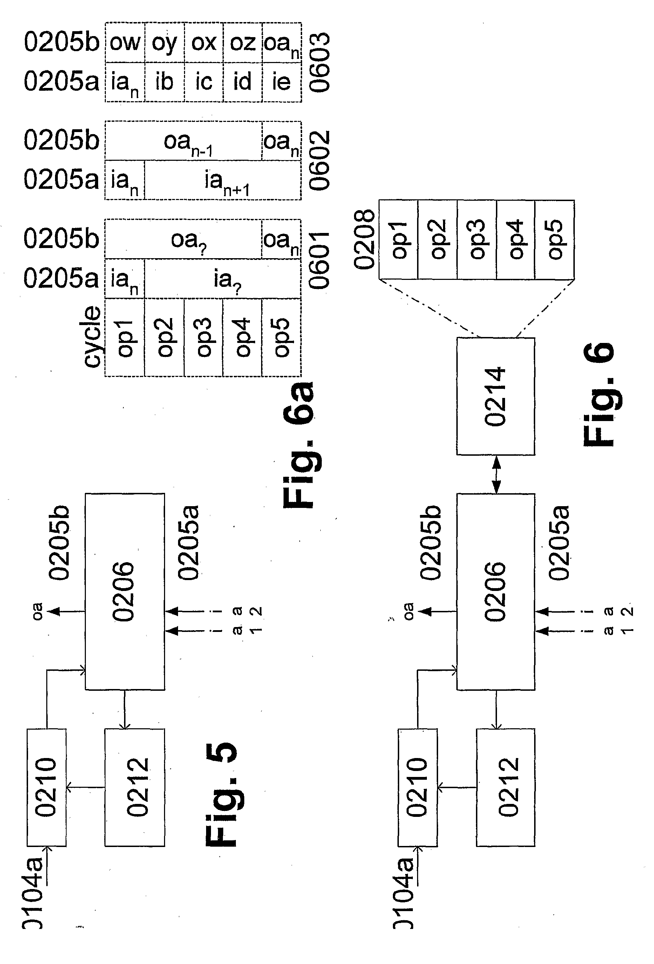

Figur 5 zeigt ein einfaches Ausführungsbeispiel für den Betrieb einer PAE nach Figur 2. Ein Datenbus (0205a) liefert die Operanden ia1 und ia2 an eine ALU (0206), die das Ergebnis der Berechnung oa an 0205b liefert. Die PAE wird nur dann aktiv, d.h. getaktet und/oder mit Strom versorgt, wenn die Datenbusüberwachungsschaltung 0212 die Annahme des vorherigen Ergebnisses oa durch den Empfänger und das Eintreffen der für die Operation erforderlichen Operanden ia1 und ia2 erkennt. Mit anderen Worten wird die PAE erst dann aktiv, wenn sämtliche Arbeitsbedingungen und -erfordernisse erfüllt sind. Die Taktfreischaltung erfolgt durch 0210, die Taktquelle ist 0104a.

Figur 6 entspricht Figur 5 mit dem Zusatz, dass ein Sequenzer (0214) aktiviert wird, der eine mehrzyklische Konfiguration (z.B. eine komplexe Berechnung wie z.B. Matrixmultiplikation o.ä.) steuert. Die Operationen entnimmt er dem Konfigurationsspeicher oder aus einem Ausschnitt des Konfigurationsspeichers. In dem dargestellten Beispiel werden die Operationen op1, op2, op3, op4, op5 sequentiell ausgeführt. Nach Beendigung wird das Ergebnis oa versendet und die PAE muss erneut aktiviert werden.

Der auf dem Datenbus 0205a/b eintretende Datentransfer ist in Figur 6a dargestellt. Es sei darauf hingewiesen, dass das Datenrouting über den Bus in per se bekannter Weise wie aus anderen Anmeldungen und/oder Veröffentlichungen des vorliegenden Anwenders bekannt, erfolgen kann, das heißt es können Kollisionsverhinderungen und Deadlock-Situationen in per se bekannter Weise für jeweils eine Konfiguration verhindert werden.

Für die Ausführung von op1 müssen die Operanden ia über 0205a verfügbar sein (0601), die Datentransfers für die restlichen Zyklen können prinzipiell undefiniert sein.

Bevorzugt kann danach 0205a die nachfolgenden Operanden übertragen (0602), wozu die Ausführungzeit von op2, op3, op4, op5 zur Verfügung steht und somit eine wesentliche zeitliche Entkopplung eingetreten ist, die die Verwendung von langsameren und/oder insbesondere längeren Bussystemen zuläßt. Alternativ (0603) können in einem Zeitmultiplexverfahren während der Ausführung von op2, op3, op4, op5 Daten anderer Konfigurationen über dasselbe Bussystem 0205a übertragen werden.

Das Ergebnis oa liegt nach op5 auf dem Bus 0205b an (0601), die Datentransfers für die restlichen Zyklen können prinzipiell undefiniert sein.

Bevorzugt kann die Zeit davor, also während der Ausführung von op1, op2, op3, op4 könnte noch zu Übertragung des vorhergehenden Ergebnisses genutzt werden (0602). Wiederum ist eine wesentliche zeitliche Entkopplung eingetreten, die die Verwendung von langsameren und/oder insbesondere längeren Bussystemen zuläßt.

Alternativ (0603) können in einem Zeitmultiplexverfahren während der Ausführung von op1, op2, op3, op4 Daten anderer Konfigurationen über dasselbe Bussystem 0205b übertragen werden. 0210 kann eine PLL zur Taktvervielfachung verwenden. Insbesondere kann eine PLL derart angewendet werden, dass der Arbeitstakt der PAE zur Abarbeitung von op1, op2, op3, op4, op5 das fünffache des Bustaktes beträgt. In diesem Fall kann sich die PAE wie eine PAE ohne Sequenzer mit nur einer (einzyklischen) Konfiguration und demselben Takt wie der Bustakt, verhalten.

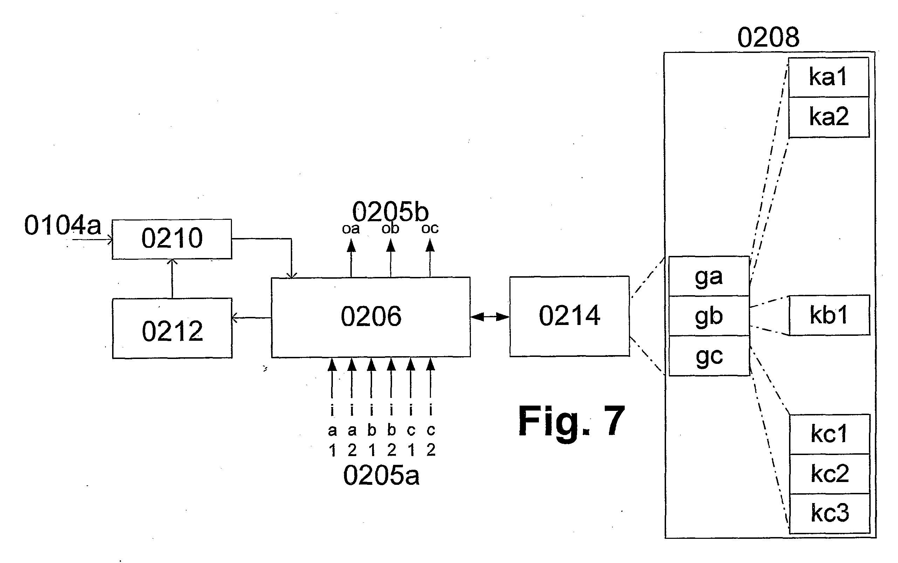

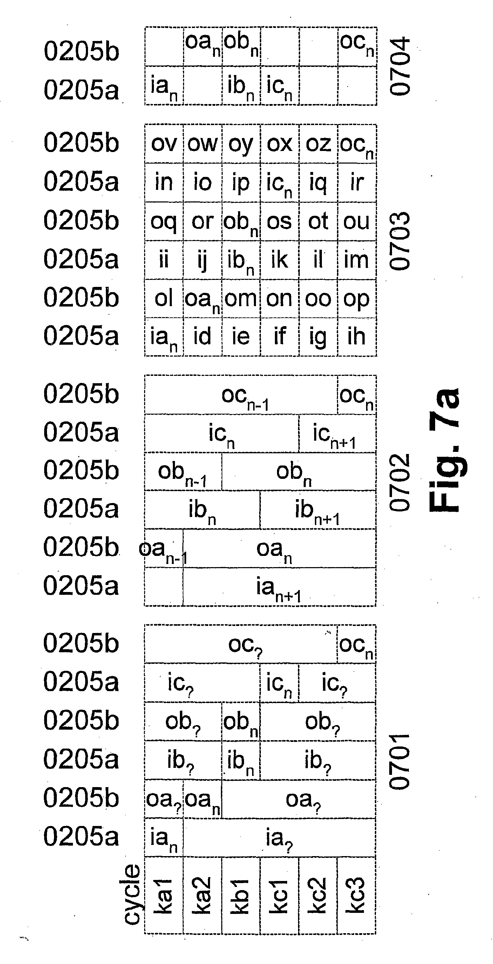

Figur 7 entspricht Figur 6 mit den Zusatz, dass mehrere Konfigurations-Gruppen (ga, gb, gc) sich die PAE zeitgemultiplext teilen und jede Gruppe Anschlüsse auf ein separater (Raumgemultiplextes) Bussystem aufweisen (ia/oa, ib/ob, ic/oc). Ein Multiplexer in 0214 selektiert zyklisch die Gruppen ga, gb, gc. Sofern die Datenbusüberwachungsschaltung 0212 eine gültige Ausführungsfreigabe(-bedingung) für eine Konfigurations-Gruppe generiert, wird die jeweilige Konfigurations-Gruppe ausgeführt, ansonsten kann auf die Ausführungsfreigabe(-bedingung) gewartet werden oder bevorzugt eine andere nächste Konfigurations-Gruppe selektiert. Die Konfigurations-Gruppen können zyklisch durchlaufen werden.

Eine Konfigurations-Gruppe kann mehrere Konfigurationsworte beinhalten (ga = {ka1, ka2}, gb = {kb1} gc = {kc1, kc2, kc3}). Die Konfigurationsworte können durch einen Sequenzer in 0214 sequentiell ausgeführt werden.

Figur 7a zeigt die Bustransfers des Beispiels nach Figur 7. 0701 entspricht 0601, 0702 entspricht 0602, 0703 entspricht 0603. Dabei werden für jede Gruppe ga, gb, gc ein eigenes Bussystem verwendet.

Zusätzlich ist in 0704 ein möglicher Bustransfer unter Verwendung eines Zeitmultiplexings für die Bussysteme dargestellt. Die Eingangsdaten sämtlicher Gruppen werden über ein Eingangs-Bussystem übertragen, die Ausgangsdaten sämtlicher Gruppen werden über ein Ausgangs-Bussystem übertragen. Die undefinierten Zwischenzyklen sind entweder unbenutzt oder frei für andere Datentransfers.

## Patentansprüche

1. Datenverarbeitungseinheit mit
einem in unterschiedlichen Konfigurationszuständen betreibbaren
Feld getakteter Logikzellen und
einem Taktvorgabemittel
zur Vorgabe einer Logikzellentaktung,
**dadurch gekennzeichnet, dass**
das Taktvorgabemittel dazu ausgebildet ist, zustandsabhängig an zumindest einer ersten Zelle einen ersten und an zumindest einer weiteren Zelle einen weiteren Takt vorzugeben.

2. Datenverarbeitungseinheit nach dem vorhergehenden Anspruch, **dadurch gekennzeichnet, dass** sie als integrierter Baustein gebildet ist.

3. Datenverarbeitungseinheit nach einem der vorhergehenden Ansprüche, **dadurch gekennzeichnet, dass** sie als Logikzellen arithmetische und/oder logische Baugruppen umfasst und bevorzugt als Prozessor mit mehreren Rechenwerken realisiert ist, bevorzugt mit Prozessorelementen, in denen unterschiedliche Sequenzen in jeweils einem eigenen Prozessorelement abgearbeitet werden können.

4. Datenverarbeitungseinheit nach einem der vorhergehenden Ansprüche, **dadurch gekennzeichnet, dass** Konfigurationsregister für Logikzellen-Teilfunktionen bestimmende Konfigurationswörter vorgesehen sind.

5. Datenverarbeitungseinheit nach einem der vorhergehenden Ansprüche, **dadurch gekennzeichnet, dass** es sich um einen Prozessor mit mehreren Rechenwerken handelt, deren ALU-Funktion durch Konfigurationsworte bestimmt wird, und der mit einem Sequenzer zur sequenziellen Abarbeitung von Konfigurationswörtern vorgesehen ist.

6. Datenverarbeitungseinheit nach einem der vorhergehenden Ansprüche, **dadurch gekennzeichnet, dass** das Taktvorgabemittel dazu ausgebildet ist, den Solltakt für wenigstens eine erste Zelle von einer Konfigurationszustände vorgebenden Einheit zu empfangen.

7. Datenverarbeitungseinheit nach einem der vorhergehenden Ansprüche, **dadurch gekennzeichnet, dass** die Konfigurationszustände vorgebende Einheit eine Compilereinheit und/oder eine Zellkonfigurationsvorgabeeinheit umfasst.

8. Datenverarbeitungseinheit nach einem der vorhergehenden Ansprüche, **dadurch gekennzeichnet, dass** das Taktvorgabemittel dazu ausgebildet ist, den Solltakt von einer Logikzelle zu empfangen.

9. Datenverarbeitungseinheit nach einem der vorhergehenden Ansprüche, **dadurch gekennzeichnet, dass** das Taktvorgabemittel wenigstens eine Zentraltaktvorgabeeinheit und wenigstens eine Lokaltaktgeneriereinheit zur Generierung des Lokaltaktes aus dem vorgegebenen Zentraltakt, insbesondere je Zelle eine Zeitabtaktgeneriereinheit, umfasst.

10. Datenverarbeitungseinheit nach einem der vorhergehenden Ansprüche, **dadurch gekennzeichnet, dass** zumindest ein Teil der Logikzellen zumindest eine ALU umfassen und/oder durch eine solche gebildet sind.

11. Datenverarbeitungseinheit nach einem der vorhergehenden Ansprüche, **dadurch gekennzeichnet, dass** zumindest einem Teil der Logikzellen zumindest ein Speicher und/oder Register zugeordnet ist.

12. Datenverarbeitungseinheit nach einem der vorhergehenden Ansprüche, **dadurch gekennzeichnet, dass** eine Vielzahl identischer Logikzellen vorgesehen ist.

13. Datenverarbeitungseinheit nach einem der vorhergehenden Ansprüche, **dadurch gekennzeichnet, dass** alle Logikzellen identisch sind.

14. Verfahren zum Betreiben einer Datenverarbeitungseinheit nach einem der vorhergehenden Ansprüche, **dadurch gekennzeichnet, dass** zumindest zeitweilig für wenigstens eine erste Zelle ein erster Zustand bestimmt, abhängig vom ersten Zustand ein der ersten Zelle zuzuordnender Takt ermittelt und für diese Zelle von einem Taktvorgabemittel zum Betrieb dieser Takt vorgegeben wird, für wenigstens eine weitere Zelle ein zweiter Zustand bestimmt wird und abhängig vom zweiten Zustand die zweite Zelle so betrieben wird, dass eine geringere Taktzahl als beim ersten Takt gewählt wird.

15. Verfahren nach dem vorhergehenden Anspruch, **dadurch gekennzeichnet, dass** für wenigstens eine erste Zelle der Takt zusammen mit ihrer oder bestimmt durch ihre Konfiguration vorgegeben wird.

16. Verfahren nach einem der vorhergehenden Verfahrensansprüche, worin eine Gruppe von Zellen gemeinsam zur Ausführung von algebraischen und/oder anderen Operationen konfiguriert wird, die eine unterschiedliche Anzahl von Taktzyklen erfordern, wobei zumindest eine Zelle, die ei-ne Operation ausführt, welche weniger Taktzellen erfordert als jene Operation, die innerhalb der Gruppe am meisten Taktzyklen erfordert, langsamer getaktet wird als wenigstens eine andere Zelle.

17. Verfahren nach einem der vorhergehenden Verfahrensansprüche, **dadurch gekennzeichnet, dass** Zellen zumindest einer Gruppe zur sequentiellen Datenverarbeitung konfiguriert werden.

18. Verfahren nach einem der vorhergehenden Verfahrensansprüche, **dadurch gekennzeichnet, dass** das Feld in wenigstens zwei Zellgruppen zur Ausführung wenigstens zweier unterschiedlicher Aufgaben konfiguriert wird, denen eine unterschiedliche Priorität zugeordnet wird und jene Zellgruppe, die zur Ausführung der Aufgabe mit geringerer Priorität angeordnet ist, mit geringerer Taktfrequenz getaktet ist.

19. Verfahren nach einem der vorhergehenden Verfahrensansprüche, **dadurch gekennzeichnet, dass** der Zustand einer Spannungsversorgungsquelle und/oder eine Temperatur bestimmt und die Zelltaktung in Abhängigkeit vom so bestimmten Spannungs- und/oder Temperaturzustand bestimmt wird.

20. Verfahren nach einem der vorhergehenden Verfahrensansprüche zum Betrieb einer Anordnung rekonfigurierbarer Logikelemente, die in unterschiedlichen Konfigurationen betrieben werden können, **dadurch gekennzeichnet, dass** für eine Vielzahl möglicher, insbesondere gleichzeitig in das Feld einkonfigurierter Konfigurationen eine noch zulässige Frequenz, insbesondere die noch ausführbare Maximalfrequenz bestimmt wird und eine Vielzahl von Zellen mit dieser Frequenz betrieben werden, wobei die Vielzahl von Zellen größer ist als jene Vielzahl, die zur Ausführung dieser sogenannten langsamsten Konfiguration gehört und wobei die Vielzahl insbesondere das gesamte Feld der konfigurierbaren Elemente umfassen kann.

21. Verfahren nach einem der vorhergehenden Verfahrensansprüche zum Betrieb einer Anordnung rekonfigurierbarer Logikelemente, die in unterschiedlichen Konfigurationen betrieben werden können, **dadurch gekennzeichnet, dass** Konfigurationen so gewählt werden, dass unter Berücksichtigung des Signaltransfers über Busleitungen maximale Frequenzen bei der Übertragung über Bussysteme erhalten werden.

22. Verfahren nach einem der vorhergehenden Verfahrensansprüche, worin den Zellen Tasks zugewiesen werden, die einen ersten Task mit einer ersten Komplexität und zumindest einen weiteren Task geringerer Komplexität als die erste Komplexität umfassen, und temporär eine oder mehrere Zellen, die auf Grund der Zuweisung eines Tasks mit geringerer Komplexität eine geringere Arbeitslast aufweisen, mit einem anderen Task ausgelastet wird und/oder augenblicklich nicht benutzte Datenverarbeitungselemente heruntergetaktet werden.

23. Verfahren nach einem der vorhergehenden Verfahrensansprüche, worin die Betriebsspannung abhängig von der Taktfrequenz bestimmt wird.

24. Verfahren nach einem der vorhergehenden Verfahrensansprüche, **dadurch gekennzeichnet, dass** mehrere Temperaturmessungen in unterschiedlichen Regionen durchgeführt werden und die Taktung jeweils lokal angepasst wird.

25. Verfahren nach einem der vorhergehenden Verfahrensansprüche, **dadurch gekennzeichnet, dass** die jeweiligen Taktfrequenzen von einem Zentraltakt hergeleitet werden und der Zentraltakt zustandsabhängig verändert wird.

## Claims

1. A data processing unit comprising
a field of clocked logic cells
which is operable in different configuration states
and
a clock preselecting means
for preselecting a logic cell clock,
**characterized in that**
the clock preselecting means is designed in such a way that, depending on the state, a first clock is preselected at least at a first cell and an additional clock is preselected at least at an additional cell.

2. The data processing unit according to the preceding claim, **characterized in that** it is formed as an integrated component.

3. The data processing unit according to any one of the preceding claims, **characterized in that** it comprises arithmetic and/or logic units as logic cells and is preferably realized as a processor with several arithmetic logic units, preferably with processor elements in which different sequences can be processed in a respective own processor element.

4. The data processing unit according to any one of the preceding claims, **characterized in that** configuration registers are provided for configuration words which determine logic-cell partial functions.

5. The data processing unit according to any one of the preceding claims, **characterized in that** it is a processor with several arithmetic logic units whose ALU function is determined by configuration words and which is provided with a sequencer for sequentially processing configuration words.

6. The data processing unit according to any one of the preceding claims, **characterized in that** the clock preselecting means is designed in such a way that it receives the setpoint clock for at least one first cell from a unit preselecting configuration states.

7. The data processing unit according to any one of the preceding claims, **characterized in that** the unit preselecting the configuration states includes a compiling unit and/or a cell configuration preselecting unit.

8. The data processing unit according to any one of the preceding claims, **characterized in that** the clock preselecting means is designed in such a way that it receives the setpoint clock from a logic cell.

9. The data processing unit according to any one of the preceding claims, **characterized in that** the clock preselecting means includes at least one central clock preselecting unit and at least one local clock generating unit for generating the local clock from the preselected central clock, in particular one time synchronizing clock generating unit per cell.

10. The data processing unit according to any one of the preceding claims, **characterized in that** at least a portion of the logic cells includes at least one ALU and/or is formed by such.

11. The data processing unit according to any one of the preceding claims, **characterized in that** at least one memory and/or register is assigned to at least a portion of the logic cells.

12. The data processing unit according to any one of the preceding claims, **characterized in that** a plurality of identical logic cells is provided.

13. The data processing unit according to any one of the preceding claims, **characterized in that** all logic cells are identical.

14. A method for operating a data processing unit according to any one of the preceding claims, **characterized in that** a first state is determined, at least temporarily, for at least one first cell, a clock which is to be assigned to the first cell is determined dependent on the first state and said clock is preselected for said cell by a clock preselecting means for operation, a further state is determined for at least one additional cell and, dependent on the second state, the second cell is operated such that a lower clock rate is selected than for the first clock.

15. The method according to the preceding claim, **characterized in that** the clock is preselected for at least one first cell either together with or determined by its configuration.

16. The method according to any one of the preceding method claims, wherein a group of cells is jointly configured for executing algebraic and/or other operations which require a different number of clock cycles, wherein at least one cell, executing an operation which requires fewer clock cells than that operation requiring the most clock cycles within the group, is clocked slower than at least one other cell.

17. The method according to any one of the preceding method claims, **characterized in that** cells of at least one group are configured for sequential data processing.

18. The method according to any one of the preceding method claims, **characterized in that** the field in at least two cell groups is configured for executing at least two different tasks to which different priorities are assigned, and the cell group appointed for executing the task having the lower priority is clocked using a lower clock frequency.

19. The method according to any one of the preceding method claims, **characterized in that** the condition of a voltage supply source and/or a temperature is determined and the cell clock is determined as a function of the voltage and/or temperature condition thus determined.

20. The method according to any one of the preceding method claims for operating a system of reconfigurable logic elements which are operable in different configurations, **characterized in that** a still admissible frequency, in particular the still executable maximum frequency, is determined for a plurality of possible configurations, in particular such that are simultaneously configured into the field, and a plurality of cells is operated using this frequency, wherein the plurality of cells is larger than the plurality which is assigned for executing this so-called slowest configuration and wherein the plurality is able, in particular, to include the entire field of the configurable elements.

21. The method according to any one of the preceding method claims for operating an arrangement of reconfigurable logic elements which are operable in different configurations, **characterized in that** configurations are selected such that, by taking signal transmissions via bus lines into account, maximum frequencies are maintained during transmissions via bus systems.

22. The method according to any one of the preceding method claims, wherein tasks are assigned to the cells which comprise a first task having a first complexity and at least one further task having a complexity that is smaller than the first complexity, and temporarily one or more cells having a lower work load because of the assignment of a task having a smaller complexity is used to full capacity with a different task and/or temporarily unused data processing elements are clocked down.

23. The method according to any one of the preceding method claims, wherein the operating voltage is determined dependent on the clock frequency.

24. The method according to any one of the preceding method claims, **characterized in that** several temperature measurements are carried out in different regions and the pulsing is adapted locally.

25. The method according to any one of the preceding method claims, **characterized in that** the respective clock frequencies are derived from a central clock and the central clock is varied dependent on the state.

## Revendications

1. Unité de traitement de données, comportant un champ de cellules logiques cadencées exploitables dans différents états de configuration et un moyen de cadencement pour définir un cadencement de cellules logiques, **caractérisée en ce que** le moyen de cadencement est prévu pour prescrire une première cadence à au moins une première cellule, et une autre cadence à au moins une autre cellule en fonction de l'état.

2. Unité de traitement des données selon la revendication précédente, **caractérisée en ce qu'**elle est réalisée comme composant intégré.

3. Unité de traitement des données selon l'une des revendications précédentes, **caractérisée en ce qu'**elle comprend des modules arithmétiques et/ou logiques en tant que cellules logiques, et est préférentiellement réalisée comme processeur comportant plusieurs unités de calcul, préférentiellement avec des éléments de processeur où peuvent être exécutées différentes séquences, chacune dans un élément de processeur propre.

4. Unité de traitement des données selon l'une des revendications précédentes, **caractérisée en ce que** sont prévus des registres de configuration pour des mots de configuration définissant des fonctions partielles de cellules logiques.

5. Unité de traitement des données selon l'une des revendications précédentes, **caractérisée en ce que** celle-ci est un processeur comportant plusieurs unités de calcul, dont la fonction UAL est définie par des mots de configuration, et qui est prévu avec un séquenceur pour l'exécution séquentielle de mots de configuration.

6. Unité de traitement des données selon l'une des revendications précédentes, **caractérisée en ce que** le moyen de cadencement est prévu pour recevoir la cadence de consigne pour au moins une première cellule d'une unité définissant des états de configuration.

7. Unité de traitement des données selon l'une des revendications précédentes, **caractérisée en ce que** l'unité définissant des états de configuration est une unité de compilation et/ou une unité de définition de configuration de cellules.

8. Unité de traitement des données selon l'une des revendications précédentes, **caractérisée en ce que** le moyen de cadencement est prévu pour recevoir une cadence de consigne d'une cellule logique.

9. Unité de traitement des données selon l'une des revendications précédentes, **caractérisée en ce que** le moyen de cadencement comprend au moins une unité de cadencement centrale et au moins une unité de génération locale pour générer le cadencement local à partir du cadencement central défini, en particulier une unité génératrice de synchronisation par cellule.

10. Unité de traitement des données selon l'une des revendications précédentes, **caractérisée en ce que** les cellules logiques comprennent au moins en partie au moins une UAL et/ou sont constituées au moins en partie par une telle UAL.

11. Unité de traitement des données selon l'une des revendications précédentes, **caractérisée en ce qu'**au moins une mémoire et/ou un registre sont affectés à au moins une partie des cellules logiques.

12. Unité de traitement des données selon l'une des revendications précédentes, **caractérisée en ce qu'**une pluralité de cellules logiques identiques est prévue.

13. Unité de traitement des données selon l'une des revendications précédentes, **caractérisée en ce que** toutes les cellules logiques sont identiques.

14. Procédé d'administration d'une unité de traitement des données selon l'une des revendications précédentes, **caractérisé en ce qu'**un premier état est déterminé au moins temporairement pour au moins une première cellule, une cadence à affecter à la première cellule est déterminée en fonction du premier état et définie pour ladite cellule par un moyen de cadencement pour l'administration de ladite cadence, **en ce qu'**un deuxième état est déterminé pour au moins une autre cellule, et **en ce que** la deuxième cellule est administrée en fonction du deuxième état de telle manière qu'une cadence inférieure est sélectionnée par rapport à la première cadence.

15. Procédé selon la revendication précédente, **caractérisé en ce que** pour au moins une première cellule, la cadence est définie avec, ou est déterminée par la configuration de celle-ci.

16. Procédé selon l'une des revendications de procédé précédentes, où un groupe de cellules est configuré en commun pour l'exécution d'opérations algébriques et/ou d'autres opérations exigeant des nombres différents de cycles d'horloge, où au moins une cellule exécutant une opération exigeant moins de cycles d'horloge que l'opération exigeant le plus de cycles d'horloge à l'intérieur du groupe, est cadencée plus lentement qu'au moins une autre cellule.

17. Procédé selon l'une des revendications de procédé précédentes, **caractérisé en ce que** les cellules d'au moins un groupe sont configurées pour un traitement séquentiel des données.

18. Procédé selon l'une des revendications de procédé précédentes, **caractérisé en ce que** le champ est configuré dans au moins deux groupes de cellules pour l'exécution d'au moins deux tâches différentes auxquelles sont affectées des priorités différenciées, et **en ce que** le groupe de cellules disposé pour l'exécution de la tâche de priorité inférieure est cadencé à une fréquence moindre.

19. Procédé selon l'une des revendications de procédé précédentes, **caractérisé en ce que** l'état d'une source d'alimentation en tension et/ou une température sont déterminés, et **en ce que** le cadencement de cellules est déterminé en fonction de l'état de tension et/ou de température ainsi déterminé.

20. Procédé selon l'une des revendications de procédé précédentes pour l'administration d'un agencement d'éléments logiques reconfigurables, pouvant être administrés dans des configurations différenciées, **caractérisé en ce que** pour une pluralité de configurations possibles, en particulier de configurations simultanément configurées dans le champ, une fréquence encore admissible, en particulier la fréquence maximale encore exécutable est déterminée, et **en ce qu'**une pluralité de cellules sont administrées avec ladite fréquence, la pluralité de cellules étant supérieure à la pluralité relevant de l'exécution de ladite configuration qualifiée de la plus lente, et la pluralité pouvant en particulier comprendre la totalité du champ des éléments configurables.

21. Procédé selon l'une des revendications de procédé précédentes pour l'administration d'un agencement d'éléments logiques reconfigurables, pouvant être administrés dans des configurations différenciées, **caractérisé en ce que** les configurations sont sélectionnées de manière à maintenir des fréquences maximales pour la transmission par des systèmes de bus, compte tenu du transfert de signaux par des lignes de bus.

22. Procédé selon l'une des revendications de procédé précédentes, où des tâches sont allouées aux cellules, lesquelles comprennent une première tâche ayant une première complexité et au moins une autre tâche de complexité moindre que la première complexité, et où une ou plusieurs cellules présentant une charge de travail inférieure en raison de l'allocation d'une tâche de moindre complexité, sont temporairement pourvues d'une autre tâche, et/ou où des éléments de traitement de données momentanément non exploités sont sous-cadencés.

23. Procédé selon l'une des revendications de procédé précédentes, où la tension de service est déterminée en fonction de la fréquence d'horloge.

24. Procédé selon l'une des revendications de procédé précédentes, **caractérisé en ce que** plusieurs mesures de température sont effectuées dans différentes zones et **en ce que** le cadencement est ajusté localement en conséquence.

25. Procédé selon l'une des revendications de procédé précédentes, **caractérisé en ce que** les différentes fréquences d'horloge sont dérivées d'une cadence centrale, et ce que la cadence centrale est variée en fonction de l'état.
